# EUROPÄISCHE PATENTANMELDUNG

(11) **EP 0 998 015 A2**
(43) Veröffentlichungstag der Anmeldung: **03.05.2000**
(21) Anmeldenummer: 99118926.7
(22) Anmeldetag: 25.09.1999
(51) Int. Cl.: H02K 15/00, H02K 17/16

(54) **Verfahren zur Herstellung eines Rotors für einen Asynchronmotor und durch das Verfahren hergestellter Rotor**

(30) Priorität: 29.10.1998 DE 19849926
(71) Anmelder: ROBERT BOSCH GMBH, 70442 Stuttgart (DE)
(72) Erfinder: Kobschätzky, Hans, Dipl.-Ing., 74343 Sachsenheim (DE)

(57) **Zusammenfassung**

Zur Herstellung eines Rotors (10) für einen Asynchronmotor schlägt die Erfindung vor, Kurzschlußstäbe (28) mit ihren beiden Enden (30) über Kurzschlußringe (22) des Rotors (10) vorstehend in Ausnehmungen eines Blechpakets (12) des Rotors (10) einzubringen und die überstehenden Enden (30) aller Kurzschlußstäbe (28) gemeinsam mittels eines rohrförmigen, Biegenocken (34) aufweisenden Biegewerkzeugs (32) in einem Arbeitsschritt auf den Kurzschlußringen (22) anliegend umzubiegen.

## Beschreibung

### Stand der Technik

Die Erfindung betrifft ein Verfahren zur Herstellung eines Rotors für einen Asynchronmotor gemäß der Gattung des Anspruchs 1 sowie einen mit dem Verfahren hergestellten Rotor gemäß der Gattung des Anspruchs 7.

Es ist bekannt, derartige Rotoren aus einem Blechpaket aus deckungsgleich aneinandergelegten Blechscheiben herzustellen, die üblicherweise auf eine Rotorwelle aufgesetzt sind. Das Blechpaket bildet einen Rotorkörper. Auf Stirnenden des Blechpakets sind zwei Kurzschlußringe aufgesetzt, die vom Blechpaket und von der Rotorwelle elektrisch isoliert sind. Das Blechpaket weist in Längsrichtung durchgehende Ausnehmungen, beispielsweise zum Umfang hin offene Nuten oder am Umfang des den Rotorkörper bildenden Blechpakets geschlossene Löcher auf, in denen Kurzschlußstäbe einliegen, die elektrisch leitend mit den Kurzschlußringen verbunden sind. Aus der DE 40 19 112 A1 ist es bekannt, die Kurzschlußstäbe zu stauchen, so daß Schließköpfe an den Enden der Kurzschlußstäbe gebildet werden, die an einander abgewandten Außenseiten der Kurzschlußringe anliegen und dadurch die Kurzschlußstäbe elektrisch leitend mit den Kurzschlußringen verbinden. Des weiteren bewirken die Schließköpfe eine mechanische Verbindung des den Rotorkörper bildenden Blechpakets mit den Kurzschlußringen und den Kurzschlußstäben.

### Vorteile der Erfindung

Gemäß dem erfindungsgemäßen Verfahren mit den Merkmalen des Anspruchs 1 werden Kurzschlußstäbe in die Ausnehmungen des Rotorkörpers eingebracht, die eine größere Länge als der Rotorkörper einschließlich der auf dessen Stirnenden aufgesetzten Kurzschlußringe haben. Die Kurzschlußstäbe stehen an beiden Enden über die Kurzschlußringe über. Die überstehenden Enden der Kurzschlußstäbe werden umgebogen, so daß die umgebogenen Enden der Kurzschlußstäbe auf Außenseiten der Kurzschlußringe anliegen und die Kurzschlußstäbe elektrisch leitend und mechanisch mit den Kurzschlußringen verbunden sind. Des weiteren bewirken die Kurzschlußstäbe mit ihren umgebogenen Enden eine mechanische Verbindung des Rotorkörpers mit den Kurzschlußringen. Sofern der Rotorkörper als Blechpaket hergestellt ist, halten die Kurzschlußstäbe mit ihren umgebogenen Enden auch die Blechscheiben des Rotorkörpers zusammen. Die Erfindung hat den Vorteil, daß das Umbiegen der überstehenden Enden der Kurzschlußstäbe einfacher als ein Stauchen ist. Weiterer Vorteil ist, daß die erforderliche Kraft und Energie beim Biegen geringer als eine Stauchkraft und eine Stauchenergie sind. Hinzu kommt, daß die Kurzschlußstäbe beim Umbiegen ihrer überstehenden Enden durch eine quer zu den Kurzschlußstäben wirkende Biegekraft beaufschlagt werden, so daß nicht wie beim Stauchen die Gefahr besteht, daß die Kurzschlußstäbe durch eine in ihrer Längsrichtung wirkende Kraft in den Ausnehmungen des Rotorkörpers verschoben werden.

Die Unteransprüche haben vorteilhafte Ausgestaltungen und Weiterbildungen des im Anspruch 1 angegebenen Verfahrens zum Gegenstand.

Vorzugsweise werden die Kurzschlußstäbe von einem langen Stab, der beispielsweise auf eine Haspel aufgerollt ist, durch Abtrennen hergestellt. Ein Ende des langen Stabes wird in eine Ausnehmung des Rotorkörpers eingebracht, so daß der lange Stab an einem Stirnende des Rotorkörpers über den Kurzschlußring übersteht. Am anderen Stirnende des Rotorkörpers wird der lange Stab mit Abstand vom Kurzschlußring abgetrennt, wobei der abgetrennte Teil des langen Stabes den Kurzschlußstab bildet, der an beiden Stirnenden des Rotorkörpers über die Kurzschlußringe vorsteht. Die überstehenden Enden des Kurzschlußstabes werden umgebogen. Das eine Ende des Kurzschlußstabes kann auch vor dem Abtrennen vom langen Stab umgebogen werden. Diese Ausgestaltung des erfindungsgemäßen Verfahrens hat den Vorteil, daß es sich durch die Zuführung der Kurzschlußstäbe in Form eines langen Stabes zur Automatisierung eignet.

Gemäß Anspruch 3 wird der lange Stab zunächst um die Länge beider Überstände des Kurzschlußstabes aus einem der beiden Kurzschlußringe vorstehend in die Ausnehmung des Rotorkörpers eingebracht. Anschließend wird der lange Stab am anderen Kurzschlußring abgetrennt und um die Länge eines Überstandes zurückbewegt, bevor die überstehenden Enden des den Kurzschlußstab bildenden abgetrennten Teils des langen Stabes umgebogen werden. Diese Ausgestaltung des erfindungsgemäßen Verfahrens hat den Vorteil, daß die Kurzschlußstäbe unmittelbar am Kurzschlußring vom langen Stab abgetrennt werden, so daß der Kurzschlußring den Stab beim Abtrennen abstützt.

Die überstehenden Enden der Kurzschlußsäbe können beispielsweise in radialer oder in tangentialer Richtung umgebogen werden. Gemäß Anspruch 4 werden die überstehenden Enden der Kurzschlußstäbe in tangentialer Richtung umgebogen und stehen vor dem Umbiegen so weit über den Rotorkörper über, daß sie nach dem Umbiegen am umgebogenen Ende eines benachbarten Kurzschlußstabes elektrisch leitend anliegen. Auf diese Weise bilden die umgebogenen Enden der Kurzschlußstäbe die Kurzschlußringe, separate Kurzschlußringe sind nicht erforderlich. Vorzugsweise überlappen die umgebogenen Enden der Kurzschlußstäbe einander, d. h. sie liegen aufeinander auf (Anspruch 5). Auf diese Weise ergibt sich ein großflächiger und niederohmiger, elektrisch gut leitender Kontakt zwischen den die Kurzschlußringe bildenden, umgebogenen Enden der Kurzschlußstäbe. Auch lassen sich die aufeinander aufliegenden, umgebogenen Enden der Kurzschlußstäbe gut miteinander verschweißen

Gemäß Anspruch 6 werden die umgebogenen Enden der Kurzschlußstäbe mit den Kurzschlußringen verschweißt. Dies hat den Vorteil einer elektrisch gut leitenden und mechanisch festen Verbindung. Weiterer Vorteil des Schweißens ist, daß eine eventuelle Isolierung der Kurzschlußringe und der Kurzschlußstäbe im Schweißbereich durch das Schweißen entfernt wird, ein separates Abisolieren erübrigt sich.

Bevorzugt ist die Verschweißung mit Ultraschall (Anspruch 7).

Gemäß Anspruch 8 werden alle oder zumindest ein Teil der umgebogenen Enden der Kurzschlußstäbe gleichzeitig mit einem oder mit beiden Kurzschlußringen verschweißt. Die Zeit für das Verschweißen der Kurzschlußstäbe mit den Kurzschlußringen verringert sich dadurch auf einen Bruchteil. Für das gleichzeitige Verschweißen aller oder mehrerer umgebogener Enden der Kurzschlußstäbe mit den Kurzschlußringen eignet sich insbesondere das Ultraschallschweißen mit einer zylindrischen oder rohrförmigen Sonotrode, die auf die umgebogenen Enden der Kurzschlußstäbe aufgesetzt und zu Ultraschall-Torsionsschwingungen angeregt wird und dadurch die umgebogenen Enden aller Kurzschlußstäbe in einem einzigen Arbeitsschritt mit den Kurzschlußringen verschweißt. Eine rohrförmige Sonotrode läßt sich über eine Rotorwelle auf die umgebogenen Enden der Kurzschlußstäbe aufsetzen.

### Zeichnung

Die Erfindung wird nachfolgend anhand eines in der Zeichnung dargestellten Ausführungsbeispiels näher erläutert. Es zeigen:
- Figuren 1 und 3 bis 5: aufeinanderfolgende Schritte des erfindungsgemäßen Verfahrens;
- Figur 2: eine Ansicht einer Blechscheibe eines Rotor-Blechpakets;
- Figur 6: eine Stirnansicht eines Rotors gemäß der Erfindung;
- Figur 7: ein zweites Ausführungsbeispiel eines erfindungsgemäßen Rotors; und
- Figur 8: ein alternatives Biegewerkzeug zur Durchführung des erfindungsgemäßen Verfahrens.

### Beschreibung der Ausführungsbeispiele

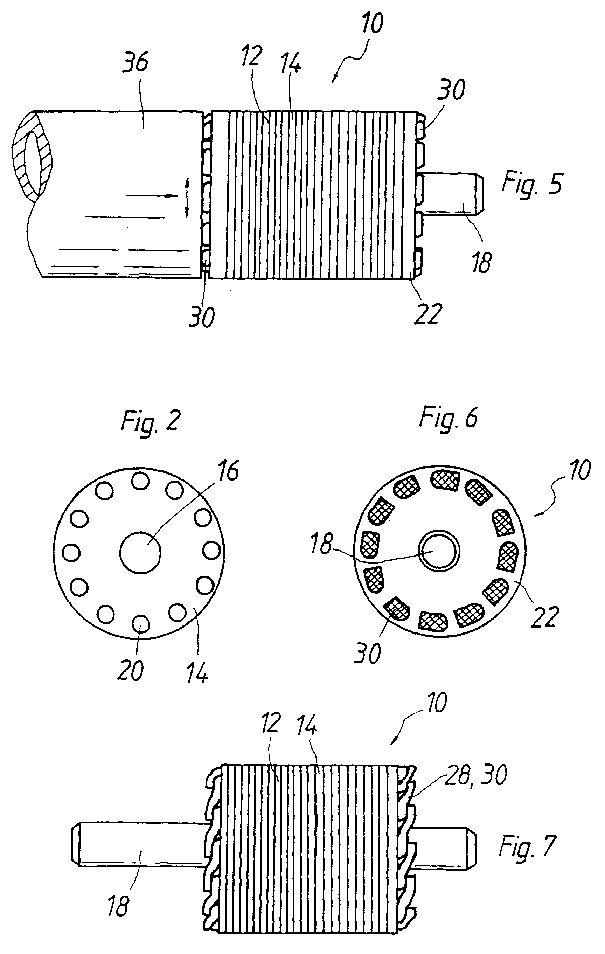

Der in der Zeichnung dargestellte, insgesamt mit 10 bezeichnete erfindungsgemäße Rotor weist als Rotorkörper ein Blechpaket 12 auf, das aus aneinanderliegende Blechscheiben 14 zusammengesetzt ist. Die Blechscheiben 14, von denen eine in Figur 2 gezeigt ist, sind als kreisrunde Scheiben aus Dynamoblech gestanzt. Sie weisen ein Mittelloch 16 zum Aufstecken auf eine Rotorwelle 18 sowie innerhalb eines Außenrandes ausgestanzte Löcher 20 auf. Die Blechscheiben 14 werden mit ihren Löchern 20 deckungsgleich auf die Rotorwelle 18 aufgesteckt und durch eine an sich bekannte, in der Zeichnung nicht sichtbare Ringverstemmung drehfest auf der Rotorwelle 18 fixiert. Die drehfeste Fixierung des Blechpakets 12 auf der Rotorwelle 18 kann auch durch eine Preßpassung der Blechscheiben 14 auf der Rotorwelle 18 erfolgen. In diesem Fall wird das Blechpaket 12 bzw. werden die Blechscheiben 14 einzeln auf die Rotorwelle 18 aufgpreßt.

Auf beide Stirnseiten des Blechpakets 12 wird ein Kurzschlußring 22 aufgesetzt, der dasselbe Aussehen wie die Blechscheiben 14 aufweist. Die beiden Kurzschlußringe 22 bestehen beispielsweise aus Kupfer, Aluminium oder einer diese Metalle aufweisenden Legierung. Die Kurzschlußringe 22 sind mit einer Isolierschicht, also beispielsweise einer durch Tauch- oder Pulverbeschichtung aufgebrachten Kunststoffschicht oder durch eine Lackschicht sowohl gegen das Blechpaket 14 als auch gegen die Rotorwelle 18 isoliert. Die Löcher 20 am Außenrand der Blechscheiben 14 des Blechpakets 12 fluchten untereinander und mit deckungsgleichen Löchern in den Kurzschlußringen 22. Die fluchtenden Löcher 20 bilden durch das Blechpaket 12 und die Kurzschlußringe 22 in Längsrichtung durchgehende Ausnehmungen zur Aufnahme von Kurzschlußstäben.

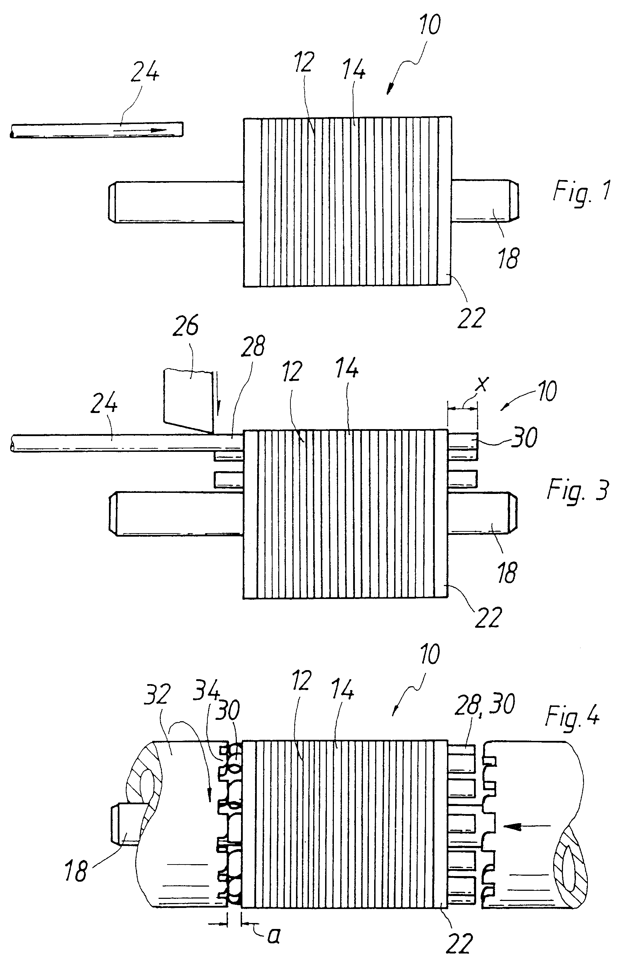

Erfindungsgemäß wird ein langer Stab 24 durch die in Längsrichtung durch das Blechpaket 12 durchgehenden Löcher 20 durchgeschoben (Figur 1), der beispielsweise von einer in der Zeichnung nicht dargestellten Haspel abgewickelt wird.

Der lange Stab 24 wird soweit durch das Blechpaket 12 geschoben, daß sein eines Ende um einen Überstand x aus einem der Kurzschlußringe 22 vorseht (Figur 3). Anschließend wird der lange Stab 24 auf der anderen Seite des Blechpakets 12 mit Abstand vom dortigen Kurzschlußring 22 mittels eines Trennwerkzeugs 26 abgetrennt. Der abgetrennte Teil des langen Stabes 24 bildet einen Kurzschlußstab 28. Der Kurzschlußstab 28 weist nach dem Abtrennen vom langen Stab 24 auf beiden Seiten des Blechpakets 12 einen Überstand x über die Kurzschlußringe 22 auf Der lange Stab 24 und damit der Kurzschlußstab 28 können aus demselben Werkstoff wie die Kurzschlußringe 22 bestehen. Der Kurzschlußstab 28 ist mit einer Isolierschicht wie die Kurzschlußringe 22 überzogen und dadurch elektrisch vom Blechpaket 12 isoliert. In beschriebener Weise werden nacheinander, gegebenenfalls auch gleichzeitig mehrere oder alle der Kurzschlußstäbe 28 in das Blechpaket 12 des Rotors 10 eingebracht.

Die an beiden Seiten überstehenden Enden 30 der Kurzschlußstäbe 28 werden anschließend umgebogen. Die überstehenden Enden 30 der Kurzschlußstäbe 28 können an sich in jeder beliegen Richtung umgebogen werden. Im dargestellten Ausführungsbeispiel werden sie in tangentialer Richtung umgebogen, was es in einfacher Weise ermöglicht, die Enden 30 aller Kurzschlußstäbe 28 zumindest auf einer Seite des Blechpakets 12 gleichzeitig mit einem gemeinsamen Biegewerkzeug 32 umzubiegen. Das Biegewerkzeug 32 ist rohrförmig und weist an seinem Stirnrand für jeden Kurzschlußstab 28 einen Biegenocken 34 auf, wobei die Biegenocken 34 nach Art von Zinnen am Stirnrand des Biegewerkzeugs 32 angeordnet sind.

Das rohrförmige Biegewerkreug 32 wird über die Rotorwelle 18 axial auf das Blechpaket 12 zubewegt, so daß seine Biegenocken 34 in Zwischenräume zwischen den Enden 30 der Kurzschlußstäbe 28 gelangen (Figur 4, rechte Seite). Dabei hält das Biegewerkzeug 32 einen Abstand a vom Kurzschlußring 22, der etwas kleiner als ein Durchmesser bzw. eine Dicke der Kurzschlußstäbe 28 ist. Anschließend wird das Biegewerkzeug 32 gegenüber dem Blechpaket 12 verdreht, wodurch die Biegenocken 34 die Enden 30 der Kurzschlußstäbe 28 in tangentialer Richtung umbiegen (Figur 4, linke Seite). Da der Abstand a der Biegenocken 34 des Biegewerkzeugs 32 vom Kurzschlußring 22 etwas kleiner als der Durchmesser der Kurzschlußstäbe 28 bzw. als deren Dicke ist, werden die Enden 30 der Kurzschlußstäbe 28 gegen den Kurzschlußring 22 gepreßt.

Nach Umbiegen der Enden 30 der Kurzschlußstäbe 28 auf beiden Seiten des Blechpakets 12 sind die Kurzschlußstäbe 28 mechanisch im Blechpaket 12 fixiert. Zusätzlich halten die Kurzschlußstäbe 28 mit ihren umgebogenen Enden 30 die Blechscheiben 14 des Blechpakets 12 und die Kurzschlußringe 22 aneinander. Das Umbiegen der Enden 30 der Kurzschlußstäbe 28 kann auf beiden Seiten des Blechpakets 12 nacheinander erfolgen. Vorzugsweise werden die Enden 30 der Kurzschlußstäbe 28 auf beiden Seiten die Blechpakets 12 mit zwei Biegewerkzeugen 32 gleichzeitig umgebogen. Dies hat zum einen den Vorteil einer Zeitersparnis. Zum anderen können die Enden 30 der Kurzschlußstäbe 28 in entgegengesetzten Richtungen umgebogen werden, wodurch sich die von den beiden Biegewerkzeugen 32 auf den Rotor 10 ausgeübten Torisionsmomente im wesentlichen ausgleichen, so daß das Blechpaket 12 beim Umbiegen der Enden 30 der Kurzschlußstäbe 28 nur mit geringer Haltekraft gegen Verdrehen gesichert werden muß. Das gleichzeitige Umbiegen der Enden 30 der Kurzschlußstäbe 28 auf beiden Seiten des Blechpakets 12 hat zudem den Vorteil, daß die Kurzschlußstäbe 28 nicht gegen ein achsparalleles Verschieben beim Ansetzen des Biegewerkzeugs 32 gesichert werden müssen.

Figur 4 zeigt rechts und links aufeinanderfolgende Verfahrensstadien beim Umbiegen der Enden 30 der Kurzschlußstäbe 28. Tatsächlich wird ein gleichzeitiges Umbiegen der Enden 30 der Kurzschlußstäbe 28 vorgezogen, d. h. die Biegewerkzeuge 32 werden auf beiden Seiten des Rotors 10 synchron bewegt.

Nach dem Umbiegen werden die Enden 30 der Kurzschlußstäbe 28 mit den Kurzschlußringen 22 verschweißt (Figur 5). Vorzugsweise wird eine Ultraschallverschweißung durchgeführt und es werden die Enden 30 aller Kurzschlußstäbe 28 auf einer Seite des Blechpakets 12 gleichzeitig verschweißt. Zum Verschweißen wird eine hohlzylindrische Sonotrode 36 axial über die Rotorwelle 18 auf die umgebogenen Enden 30 der Kurzschlußstäbe 28 aufgesetzt. Die Sonotrode 36 wird zu Ultraschall-Torsionsschwingungen angeregt, wodurch die Enden 30 aller Kurzschlußstäbe 28 in einem Arbeitsschritt mit dem Kurzschlußring 22 verschweißt werden. Durch die beim Schweißen auftretende Reibung und Temperatur wird die Isolierschicht von den Kurzschlußstäben 28 und von den Kurzschlußringen 22 an den Schweißstellen entfernt, so daß die Kurzschlußstäbe 28 mit ihren umgebogenen Enden 30 elektrisch leitend und mechanisch mit den Kurzschlußringen 22 verbunden sind. Ein Abisolieren der Kurzschlußstäbe 28 und der Kurzschlußringe 22 vor dem Ultraschallschweißen ist nicht notwendig. Die umgebogenen Enden 30 der Kurzschlußstäbe 28 können auf beiden Seiten des Blechpakets 12 nacheinander oder gleichzeitig mit zwei Sonotroden 36 mit den Kurzschlußringen 22 verschweißt werden. Nach dem Verschweißen mit den Kurzschlußringen 22 weisen die umgebogenen Enden 30 der Kurzschlußstäbe 28 ein für das Ultraschallschweißen typische Waffelmuster auf (Figur 6).

Es ist möglich, das Umbiegen der Enden 30 der Kurzschlußstäbe 28 und das Verschweißen der umgebogenen Enden 30 mit den Kurzschlußringen 22 mittels Ultraschall mit einem Werkzeug auszuführen. Dazu wird die Sonotrode als Biegewerkzeug mit Biegenocken 34 versehen (nicht dargestellt). Eine solche Sonotrode hat das Aussehen des Biegewerkzeugs 32. Sie wird wie das Biegewerkzeug 32 axial auf das Blechpaket 12 zubewegt und anschließend verdreht, so daß die Enden 30 der Kurzschlußstäbe 28 wie in Figur 4 links dargestellt umgebogen werden. Anschließend wird die zum Umbiegen der Enden 30 der Kurzschlußstäbe 28 verwendete Sonotrode zu Ultraschall-Torsions-schwingungen angeregt und verschweißt dadurch die umgebogenen Enden 30 der Kurzschlußstäbe 28 mit den Kurzschlußringen 22.

Figur 7 zeigt eine abgewandelte Ausführungsform eines erfindungsgemäßen Rotors 10. Bei diesem Rotor 10 stehen die Enden 30 der Kurzschlußstäbe 28 vor dem Umbiegen so weit über den aus den Blechscheiben 14 zusammengesetzten Rotorkörper 12 über, daß sie sich nach dem Umbiegen zumindest berühren und vorzugsweise einander überlappen. Die umgebogenen Enden 30 der Kurzschlußstäbe 28 sind durch ihre Anlage aneinander elektrisch leitend miteinander verbunden und bilden die Kurzschlußringe des Rotors 10. Separate Kurzschlußringe 22 wie bei dem in Figuren 1 bis 6 dargestellten Rotor 10 sind bei dem in Figur 7 dargestellten Rotor 10 nicht notwendig und nicht vorhanden. Die umgebogenen Enden 30 der Kurzschlußstäbe 28 des in Figur 7 dargestellten Rotors 10 sind wie zu Figur 5 beschrieben ultraschallverschweißt und dadurch mechanisch fest und elektrisch gut leitend miteinander verbunden. Im übrigen ist der in Figur 7 dargestellte Rotor 10 gleich aufgebaut und in gleicher Weise hergestellt wie der in Figuren 1 bis 6 dargestellte Rotor 10. Zur Vermeidung von Wiederholungen wird insoweit auf die vorstehenden Ausführungen zu Figuren 1 bis 6 verwiesen. Für gleiche Bauteile werden gleiche Bezugszahlen verwendet.

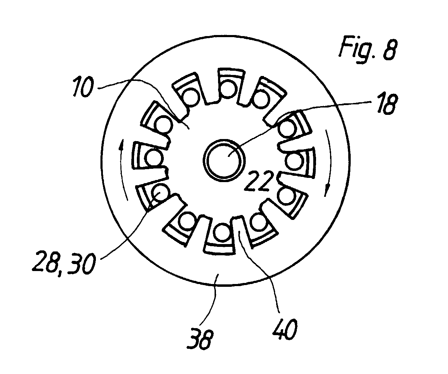

Figur 8 zeigt ein alternatives Biegewerkzeug 38, das anstelle des in Figur 4 dargestellten Biegewerkzeugs 32 zum Umbiegen der überstehenden Enden 30 der Kurzschlußstäbe 28 verwendet werden kann. Das in Figur 8 dargestellte Biegewerkzeug 38 hat die Form eines Rings, von dessen Innenrand Biegenocken 40 radial nach Innen abstehen. Das Biegewerkzeug 38 wird über die Rotorwelle 18 axial auf das Blechpaket 12 zubewegt, so daß die Biegenocken 34 in Zwischenräume zwischen den Enden 30 der Kurzschlußstäbe 28 gelangen. Anschließend wird das Biegewerkzeug 38 in Richtung der Pfeile in Figur 8 gegenüber dem Rotor 10 verdreht, wodurch die überstehenden Enden 30 der Kurzschlußstäbe 28 in tangentialer Richtung umgebogen werden.

## Patentansprüche

1. Verfahren zur Herstellung eines Rotors für einen Asynchronmotor, wobei der Rotor einen Rotorkörper aufweist, der in Längsrichtung durchgehende Ausnehmungen zur Aufnahme von Kurzschlußstäben aufweist, und wobei an beiden Stirnenden Kurzschlußringe auf den Rotorkörper aufgesetzt sind **dadurch gekennzeichnet**, daß in die Ausnehmungen (20) des Rotorkörpers (12) Kurzschlußstäbe (28) eingebracht werden, die eine größere Länge als der Rotorkörper (12) zusammen mit den Kurzschlußringen (22) aufweisen, und daß über die Kurzschlußringe (22) überstehende Enden (30) der Kurzschlußstäbe (28) umgebogen werden, so daß die Kurzschlußstäbe (28) elektrisch leitend mit den Kurzschlußringen (22) verbunden sind.

2. Verfahren nach Anspruch 1, **dadurch gekennzeichnet**, daß ein langer Stab (24) die beiden Kurzschlußringe (22) durchsetzend in eine Ausnehmung (20) des Rotorkörpers (12) eingebracht wird, so daß der lange Stab (24) an einem Ende mit einem Überstand (x) aus dem einen Kurzschlußring (22) vorsteht, und daß der lange Stab (24) an seinem anderen Ende mit Überstand aus dem anderen Kurzschlußring (22) vorstehend abgetrennt wird, so daß ein abgetrennter Teil des langen Stabes (24) einen Kurzschlußstab (28) bildet.

3. Verfahren nach Anspruch 1 oder 2, **dadurch gekennzeichnet**, daß die Überstände (x) an beiden Enden eines Kurzschlußstabs (28) dadurch hergestellt werden, daß ein langer Stab (24) zunächst um die Länge beider Überstände (x) aus einem Kurzschlußring (22) vorstehend in eine Ausnehmung (20) des Rotorkörpers (12) eingebracht, daß der lange Stab (24) anschließend am anderen Kurzschlußring (22) abgetrennt, und daß ein von dem langen Stab (24) abgetrennter Teil, der den Kurzschlußstab (28) bildet, nach dem Abtrennen um die Länge des einen Überstandes zurückbewegt wird.

4. Verfahren nach Anspruch 1, **dadurch gekennzeichnet**, daß die über den Rotorkörper (12) überstehenden Enden (30) der Kurzschlußstäbe (28) in tangentialer Richtung umgebogen werden, so daß die Kurzschlußstäbe (28) elektrisch leitend miteinander verbunden sind und die umgebogenen Enden (30) der Kurzschlußstäbe (28) die Kurzschlußringe (22) bilden.

5. Verfahren nach Anspruch 4, **dadurch gekennzeichnet**, daß das umgebogene Ende (30) eines Kurzschlußstabes (28) das umgebogene Ende (30) eines benachbarten Kurzschlußstabes (28) überlappt.

6. Verfahren nach Anspruch 1, **dadurch gekennzeichnet**, daß die umgebogenen Enden (30) der Kurzschlußstäbe (28) mit den Kurzschlußringen (22) verschweißt werden.

7. Verfahren nach Anspruch 6, **dadurch gekennzeichnet**, daß die umgebogenen Enden (30) der Kurzschlußstäbe (28) mit den Kurzschlußringen (22) ultraschallverschweißt werden.

8. Verfahren nach Anspruch 6, **dadurch gekennzeichnet**, daß die umgebogenen Enden (30) mehrerer oder aller Kurzschlußstäbe (28) gleichzeitig mit zumindest einem der beiden Kurzschlußringe (22) verschweißt werden.

9. Rotor für einen Asynchronmotor, mit einem Rotorkörper, der in Längsrichtung durchgehende Ausnehmungen aufweist, in denen Kurzschlußstäbe einliegen, und mit Kurzschlußringen, die an beiden Stirnenden des Rotorkörpers angebracht sind, **dadurch gekennzeichnet**, daß die Kurzschlußstäbe (28) über die Kurzschlußringe (22) überstehende Enden (30) aufweisen, die auf Außenseiten der Kurzschlußringe (22) umgebogen sind.

10. Rotor nach Anspruch 9, **dadurch gekennzeichnet**, daß die Kurzschlußstäbe (28) über den Rotorkörper (12) überstehende Enden (30) aufweisen, die in tangentialer Richtung umgebogen sind, so daß sie das überstehende und umgebogene Ende (30) eines benachbarten Kurzschlußstabes (28) berühren und elektrisch leitend zu Kurzschlußringen (22) miteinander verbunden sind.

11. Rotor nach Anspruch 9, **dadurch gekennzeichnet**, daß die umgebogenen Enden (30) der Kurzschlußstäbe (28) mit den Kurzschlußringen (22) verschweißt sind.

12. Rotor nach Anspruch 9, **dadurch gekennzeichnet**, daß die umgebogenen Enden (30) der Kurzschlußstäbe (29) mit den Kurzschlußringen (22) ultraschallverschweißt sind.
